# EUROPEAN PATENT APPLICATION

(11) **EP 4 730 254 A1**
(43) Date of publication of application: **22.04.2026**
(21) Application number: 24207027.4
(22) Date of filing: 16.10.2024
(51) Int. Cl.: G06T 5/94, G06T 7/00

(54) **SYSTEM AND METHOD FOR LYMPH NODE MAPPING**

(71) Applicant: Perfusion Tech ApS, 2100 København Ø (DK)
(72) Inventor: Madsen, Mads Holst Aagaard, 2200 Copenhagen N (DK); Lund, Morten Asp Vonsild, 2200 Copenhagen N (DK); Juhl, Malte Kjellerup, 2100 København Ø (DK)
(74) Representative: FRKelly

(57) **Abstract**

The present disclosure relates to a system and a method for identifying, detecting and/or mapping lymph nodes, in particular sentinel lymph nodes, by means of fluorescence imaging. One aspect of the present disclosure relates to a computer implemented method for improving visualization of at least one fluorescent anatomical structure in images of tissue acquired from a subject, the method comprising the steps of receiving fluorescence images of the tissue, and enhancing contrast in the images to improve visualization of fluorescent anatomical structures in the images.

## Description

The present disclosure relates to a system and a method for visualizing, detecting, identifying, and/or mapping lymph nodes, in particular sentinel lymph nodes, by means of contrast enhanced fluorescence imaging and the use of Al-assisted detection and identification.

### Background

Some forms of cancer follow an ordered progression when spreading. First, they spread to regional lymph nodes, then the subsequent level of lymph nodes, and so on. This is due to the fact that the flow of lymph is directional, i.e. some cancers spread in a predictable way from where the cancer started. Hence, if the cancer spreads it will first spread to lymph nodes close to the tumour before it spreads to other parts of the body.

For example, colorectal carcinoma is the 3rd most common type of cancer worldwide, and the second leading cause of cancer-related deaths. The current gold standard treatment of colon carcinoma remains en-bloc resection of the colonic segment including the draining lymph nodes. Unfortunately, segmental resections overtreat 80-90% of patients with T1-2 colon cancer, since they do not have lymph node metastases. Furthermore, colonic resection is associated with substantial morbidity. Morbidity is known to have a substantial impact on quality of life and is also associated with a high economic burden.

The sentinel lymph node is defined as the hypothetical first lymph node or group of nodes draining a cancer. I.e. the sentinel lymph node(s) can be seen as the target organs primarily reached by metastasizing cancer cells from the tumor. The concept of a sentinel lymph node procedure is to determine if the cancer has spread to the sentinel lymph node(s) or not. If the sentinel lymph node does not contain cancer, then there is a high likelihood that the cancer has not spread to any other area of the body, and lymph node metastasis is therefore one of the most important prognostic signs and is used in the staging of many types of cancer.

The sentinel lymph node procedure can find application in various circumstances, such as malignant melanoma surgery, breast cancer, colon cancer, penile cancer, urinary bladder cancer, prostate cancer, testicular cancer and renal cell cancer.

There are many advantages of the sentinel node procedure. Lymph node dissections can be decreased where unnecessary, thereby reducing the risk of lymphedema. And the increased attention on any identified lymph nodes that most likely contain metastasis is also more likely to detect micro-metastasis which may result in cancer staging and treatment changes.

One way of detecting lymph nodes in a subject is by acquiring fluorescence images of a region of the subject. Image analysis of fluorescence images in the field of medical imaging is an established technique. However, the state of the art relates to standard contrast adjustments between target regions, by e.g. adjusting the intensity of an area in the fluorescence image. Therefore, such techniques may lead to inaccuracies in the estimation of targets in the fluorescence image, and new image processing methods need to be developed.

### Summary

In fluorescent imaging injection of fluorescence imaging agents, aka fluorescent contrast agents, aka fluorescent agents, such as indocyanine green (ICG), is provided to visualize blood flow and perfusion in tissue of anatomical structures. Surgeons increasingly use fluorescence imaging during video assisted surgery and real-time fluorescence-guided surgery has spread worldwide, mainly due to its usefulness during the intraoperative decision-making processes. The success of any gastrointestinal oncologic resection is for example based on the anatomical identification of the primary tumour and its regional lymph nodes.

But the lymph nodes are typically identified manually by the surgeon, and even though the lymph nodes typically light up with more intensity in the video feed. Hence, currently SLN identification and biopsy rely on assessment by the surgeon. If submucosal injection is performed, SLNs and surrounding tissue fluoresce. Preferably, the SLN exhibits high intensity fluorescence while the surrounding tissue remain non-fluorescent. However, it remains difficult to correctly identify all lymph nodes, e.g. due to possible scattering and autofluorescence of tissue or automatic gain in the imaging system used. For SLN identification and for various procedures such as a biopsy, the surgeon should perform the procedure in a prompt, precise, and confident manner. To elaborate on confidence, the surgeon should be confident that a perceived SLN is surely a SLN and not a different anatomical structure. Otherwise, the surgeon will not perform a SLN biopsy if the surgeon is not confident in the presence of a SLN. The surgeons therefore need a tool which makes lymph node identification easier and preferably also a tool for automatic lymph node mapping.

One aspect of the present disclosure therefore relates to a computer implemented method for improving visualization of at least one fluorescent anatomical structure in images of tissue acquired from a subject. In the preferred embodiment the method comprising the steps of receiving fluorescence images of the tissue, and enhancing contrast in the images to improve visualization of fluorescent anatomical structures in the images. The images may comprise fluorescence video images of the tissue, i.e. such that contrast enhancement is execute on a video stream of images. For example when the fluorescence images are continuously acquired. Contrast may be enhanced and improved by application of adaptive histogram equalization, in particular contrast limited adaptive histogram equalization (CLAHE).

By enhancing the contrast in the fluorescence images, the contrast in the images is improved thereby making the images better for human vision. Preferably contrast is enhanced locally in the images, i.e. in areas where the intensity is highest, such that visualisation of the most important parts of the images with highest fluorescence are improved. Hence, contrast is enhanced in the images such that anatomical structures accumulating said fluorescent contrast agent(s) are visually enhanced. Further, by utilizing adaptive histogram equalization, the accuracy of detecting SLNs can be significantly increased due to optimal contrast differences in local areas of interest, such as near SLNs. Therefore, utilizing such a contrast enhancement method can provide better results in identifying SLNs.

Adaptive histogram equalization differs from ordinary histogram equalization in the respect that the adaptive method computes several histograms, each corresponding to a distinct section of the image, and uses them to redistribute the lightness values of the image, i.e. each pixel is mapped differently. Hence the intensities are distributed locally and contrast is enhanced based on the local area rather than the entire image. It is therefore suitable for improving the local contrast and enhancing the definitions of edges in each region of an image. Hence, AHE improves the local contrast of an image, information of all intensity ranges of the image can be viewed simultaneously and more details can be observed.

The present disclosure further relates to a method for training an artificial intelligence (Al) model for automatically identifying a predefined anatomical structure in fluorescence images of tissue acquired from a subject. The preferred embodiment of the method comprising the steps of obtaining a plurality of training images comprising fluorescence images of tissue with fluorescent anatomical structures; improving visualization of fluorescence images, preferably utilizing the presently disclosed contrast enhancement approach; annotating and/or labelling fluorescent anatomical structures identified in the contrast enhanced fluorescence images, and training the AI model using the contrast enhanced fluorescence images as training images, and wherein the annotated and contrast enhanced fluorescence images are used at output for the AI model.

With a trained AI model the natural next step is then a computer implemented method for automatic assessment of an anatomical structure in fluorescence video images of tissue acquired from a subject, the method comprising the steps of: continuously receiving and/or acquiring fluorescence images of the tissue, and automatically assessing anatomical structure in real time by utilizing the trained AI model.

The inventors have realized that with the improved visualisation of anatomical structures in fluorescent images as described herein, artificial intelligence (Al) can be utilized to possibly provide for automatic real time assessment of for example lymph nodes in lymph node mapping, in particular if the training data fed into the model has been labelled by relevant experts in the field. Moreover, fluorescence images having been treated with contrast enhancement, such as CLAHE, may also be utilized as data to be fed into the model, in order to increase the model's accuracy and precision into identifying SLNs, and to improve the loss function.

The presently disclosed approach can be used to improve the outcome of organ-preserving surgery. The preferred surgical procedure for patients having colon carcinoma, in particular high-risk T1 and low-risk T2 colon carcinoma, is organ-preserving surgery, because this procedure is known to decrease morbidity and mortality in the patients while maintaining oncological safety. Organ-preserving surgery involves wedge resection with sentinel lymph node (SLN) biopsy. Improved sentinel lymph node biopsy may therefore identify patients with colon carcinoma, in particular node-positive pT1-2 colon carcinoma. It is estimated that a procedure using submucosal injection of ICG in combination with the presently disclosed approach of automatic assessment of SLNs, have a sensitivity of at least approximately 85% for the identification of lymph node metastases. In particular, it is expected that the presently disclosed approach can improve the false-negative rates in SLN, because some sentinel lymph nodes may have a slow drainage, i.e. less fluorescent intensity. With improved image visualization such badly drained lymph nodes can be better detected, identified and/or outlined.

The presently disclosed approach is beneficial in several situations. For example, the presently disclosed approach can assist an inexperienced surgeon with identifying SLNs, potentially to a degree that the performance is comparable to an experienced surgeon. Moreover, the presently disclosed approach may enhance the visualization and the identification of SLNs while using a very low amount of ICG. Thus, typical problems such as increased distance to camera, or increased depth of SLN in the tissue can be mitigated. At state of the art operations, surgeons may miss these SLNs or may first identify the SLNs in a 2nd or even 3rd review.

Furthermore, the presently disclosed approach may reduce the waiting time currently seen in operating rooms where ICG is injected submucosally and 20 minutes wait time is not uncommon before the ICG signal is strong enough to start looking for SLNs. By reducing the needed waiting time, the surgery time can be reduced which can improve both patient outcome and hospital economy.

The present disclosure further relates to a system for improving visualization of at least one fluorescent anatomical structure in images of tissue acquired from a subject, for example during a medical procedure, the system configured for carrying out the presently disclosed method for improving visualization of at least one fluorescent anatomical structure .

The present disclosure further relates to a system for training an artificial intelligence (Al) model for automatically identifying a predefined anatomical structure in fluorescence images of tissue acquired from a subject, the system configured for carrying out presently disclosed method for training an artificial intelligence (Al) model for automatically identifying a predefined anatomical structure in fluorescence images

The present disclosure further relates to a system for automatic assessment of an anatomical structure in fluorescence video images of tissue acquired from a subject, the system configured for carrying out presently disclosed method for automatic assessment of an anatomical structure in fluorescence video images of tissue acquired from a subject.

The presently disclosed methods can advantageously be fully or at least partly computer implemented. One exception if the manual annotation of training images, which might involve medical experts.

The presently disclosed methods may be implemented as one or more separate computer programs but may also be implemented as a plugin to an existing service running on a device or online.

The present disclosure therefore also relates to a computer program having instructions which when executed by a computing device or system causes the computing device or system to perform the methods disclosed herein.

Computer program in this context shall be construed broadly and include e.g. programs to be run on a PC or software designed to run on smartphones, tablet computers or other mobile devices. Computer programs and mobile applications include software that is free and software that has to be bought, and also include software that is distributed over distribution software platforms or running on a server.

### Description of the drawings

The present disclosure will in the following be described in greater detail with reference to the drawings. The drawings are exemplary and are intended to illustrate some of the features of the present method and system and are not to be construed as limiting to the present disclosure.
Fig. 1 shows the loss function as a function of optimization steps for two different AI models, with and without visual improvement using contrast enhancement.
Fig. 2 shows the precision curve during training for the two different AI models.
Fig. 3 shows the recall curve during training for the two different AI models.

### Detailed description

### Contrast enhancement

Brightness adjustment and contrast enhancement are good supplements, because brightening an image will increase contrast in dark areas but decrease contrast in bright areas, whereas darkening the image will have the opposite effect. In that regard the presently disclosed approach may comprise the step of adjusting the brightness of the fluorescence images, preferably globally adjusting the brightness, preferably prior to contrast enhancement. Brightness of the fluorescence images is preferably reduced, such as reduced by at least 5%, 10%, preferably at least 15% or 20%, in order to increase contrast in the bright areas. This reduction may be based on a measured maximum intensity / brightness of the fluorescence images.

The presently disclosed visualization approach can be seen as a contrast-enhancing overlay that can be turned on and off as desired on a live stream, video, or still image. The presently disclosed approach may be executed on an image-by-image basis / frame-by-frame basis, i.e. an image is taken as input and the presently disclosed visualisation improvement is applied to the image, i.e. the enhanced image is the output. The presently disclosed approach is preferably configured such that it can be executed in real-time, or substantially in real-time, such that visualisation of fluorescent images acquired during medical examination can be improved instantly by the presently disclosed approach. Also the automatic assessment of the fluorescent images is preferably executed in real time, or substantially in real time, such that anatomical regions, such as lymph nodes, can be detected, identified and/or outlined in real time during acquisition, e.g. during medical examination. A preliminary study on the performance of the presently disclosed approach reveals that up until approx. 300 FPS of 4k images can be analysed in real time. So a normal video stream of approx. 30 FPS can indeed be possible to analyse and visualize in real-time.

Image acquisition can be provided by means of an endoscope or other similar devices. During fluorescent imaging it is normal that both a fluorescent signal and background signal, e.g. a normal RGB or black/white signal, is acquired and combined / overlayed for the user. The presently disclosed approach is preferably only applied to the fluorescent images, i.e. the presently disclosed approach may include an initial step of separating the fluorescent signal from the background signal to obtain the fluorescence images of the tissue, if the received signal includes both signals.

In both situations the presently disclosed approach may also include a step of combining the contrast enhanced fluorescence images with a background signal such that both signals are shown to user. In such situations the low intensity parts of the fluorescent images are of less importance and the transparency of the low intensity parts of the fluorescence images can be increased such that the background signal dominates the images in section with low fluorescence.

The presently disclosed approach is optimal for situations where fluorescent images are acquired a predefined period of time after at least one fluorescent contrast agent has been supplied to the subject, for example injected intravenously and/or injected submucosal and/or injected subserosal, i.e. such that fluorescence is provided over a longer period of time compared to for example injection of fluorescent contrast agent into a vein, used for example for perfusion imaging.

Contrast is the difference in luminance or colour that makes an object in an image distinguishable. Deblurring, noise removal, and contrast enhancement are some examples of image enhancement operations, but contrast enhancement is a very important techniques for improving visualisation of an image. The term contrast in digital images is the separation of dark and bright areas present in the image. The idea behind contrast enhancement is to increase the dynamic range of the grey levels in the image being processed

Various global techniques for contrast enhancement that can be used herein are Brightness Bi-Histogram Equalization (BBHE), Dualistic Subimage Histogram Equalization (DSIHE), Recursive Mean Separate Histogram Equalization (RMSHE), Minimum Mean Brightness Error Bi-HE (MMBEBHE), Recursive Separated and Weighted Histogram Equalization (RSWHE). A preferred contrast enhancement method is histogram equalization. Global techniques are fast and simple and are suitable for overall enhancement of the image. But these techniques cannot adapt to local brightness features of the input image because only global histogram information over the whole image is used, which limits the contrast ratio in some parts of the image and may hence cause contrast losses in the background and other small regions. One such example of global enhancement technique is global histogram equalization.

An image histogram is a type of histogram that acts as a graphical representation of the tonal distribution in a digital image by plotting the number of pixels for each tonal value, i.e. the histogram of an image represents the relative frequency of occurrence of grey levels to preserve mean brightness of the input image. Histogram equalization employs contrast adjustment and works by flattening the histogram of the input image and stretches dynamic range of grey levels by using a cumulative density function of the image, histogram equalisation hence re-maps the grey levels of the input image by reassigning intensity values of pixels to make a uniform intensity distribution.

These global methods perform good contrast enhancement, but they do not enhance local areas of the image. Local enhancement techniques may overcome this problem, because local enhancement techniques can enhance overall contrast more effectively, however with the cost of an increased computational cost. In local enhancement, a small window slides through every pixel of the input image sequentially and only those block of pixels are enhanced that fall in this window. Examples of local contrast enhancement techniques that can be used herein are Adaptive Histogram Equalization (AHE), and Contrast Limited Adaptive Histogram Equalization (CLAHE), with CLAHE as the preferred choice.

Adaptive histogram equalization differs from ordinary histogram equalization in the respect that the adaptive method computes several histograms, each corresponding to a distinct section of the image, and uses them to redistribute the lightness values of the image, i.e. each pixel is mapped differently. Hence the intensities are distributed locally and contrast is enhanced based on the local area rather than the entire image. It is therefore suitable for improving the local contrast and enhancing the definitions of edges in each region of an image. Hence, AHE improves the local contrast of an image, information of all intensity ranges of the image can be viewed simultaneously and more details can be observed.

CLAHE may also be used in combination with an artificial intelligence (Al) model, said AI model is configured to utilize the CLAHE in order to use processed images as training data for the AI model. Specifically, CLAHE may be used to track areas of interest in a fluorescent image, making such images that are modified with CLAHE suitable to be training data for an AI model. Further details regarding the above are provided at the next sections of the present disclosure.

Apart from the advantage of local enhancement, Adaptive histogram equalization has some limitations also. As enhancement is carried out in a local area, AHE tends to over enhance the noise content. Contrast Limited Adaptive histogram equalization (CLAHE) is a variant of adaptive histogram equalization in which the contrast amplification is limited, so as to reduce this problem of noise amplification.

By means of CLAHE the input image can be partitioned into many non-overlapping regions that have almost equal sizes and histogram equalization is applied to each of these regions, i.e. CLAHE enhances brightness to a specific range and hence facilitates the comparison of the different regions of the image. CLAHE thereby limits the amplification of noise and can use (bilinear) interpolation to correct inconsistencies between borders in the image so that image appears more natural. The distribution of used grey levels may become more even by applying this technique and hence hidden features in the images become more visible.

The contrast amplification in the vicinity of a given pixel value is normally given by the slope of the transformation function. This is proportional to the slope of the neighbourhood cumulative distribution function (CDF) and therefore to the value of the histogram at that pixel value. CLAHE limits the amplification by clipping the histogram at a predefined value before computing the CDF. This limits the slope of the CDF and therefore of the transformation function. The value at which the histogram is clipped, the so-called clip limit, depends on the normalization of the histogram and thereby on the size of the neighbourhood region. Common values limit the resulting amplification to between 3 and 4. The advantages of using CLAHE are that it is easy to use, uses simple calculation, and gives good output in local areas of the image.

It is advantageous not to discard the part of the histogram that exceeds the clip limit but to redistribute it equally among all histogram bins. The redistribution may push some bins over the clip limit again, possibly providing an effective clip limit that is larger than the predefined limit. If this is undesirable, the redistribution procedure can be repeated recursively until the excess is negligible.

CLAHE can usually be defined by at least two hyper parameters: the clip limit (CL) and the number of tiles (NT). The clip limit is a numeric value that controls the noise amplification. Once the histogram of each sub-area is calculated, they are redistributed in such a way that its height does not exceed the desired clip limit. Then, the cumulative histogram is calculated to perform the equalization. The number of tiles is an integer value which controls the amount of non-overlapping regions: based on the number of tiles, the image is divided into several (usually squared) non-overlapping regions of equal sizes. For example for 512 × 512 images, the number of regions can be appropriately selected to be equal to 64, i.e. the number of tiles is 8 × 8. In addition, low pass filters, high pass filters and some other enhancement filters can be used for achieving better results.

Test examples with fluorescence images where the presently disclosed contrast enhancement have been, SLNs become clearly visible in comparison with the original unedited fluorescence images.

Part of a fluorescence image of a subject can for example be highly fluorescent. Without performing any contrast enhancement, it can be challenging even for a gastroenterologist (GI) to identify whether that area comprises a SLN or not during medical examination. But tests have shown that by enhancing the image by using contrast limited adaptive histogram equalization, as disclosed herein, a SLN can now be identified with high accuracy. Further enhancement to aid the surgeon can be provided by using a colour mapping scheme, as described in the section below.

### Colour mapping

Fluorescence imaging typically includes acquisition of a black and white background signal and a black and white fluorescent signal. When combining these signals, the fluorescent images are typically provided with a single colour to visually distinguish the fluorescent images from the background signal. Many hardware systems use the green colour to mark the fluorescent signal, other use the blue colour. In particular, the green colour is not good for human perception. However, the inventors have found that visual perception of the user is improved if the fluorescent images are shown as a color spectrum instead of just green or blue. It has been found that the human brain perceives variations in lightness as changes in the data much better than changes in hue. A perceptually uniform colour map is the preferred choice, which is a colour map in which equal steps in data are perceived as equal steps in the colour space. The presently disclosed approach may therefore further comprise a step of applying colour mapping to the fluorescence images. Application of one or more colour maps are preferably provided after contrast enhancement of the images.

Colour maps which have monotonically increasing lightness through the colour map are preferred because they are better interpreted by the viewer. Hence, preferably the colour mapping is based on a predefined colour scale, preferably selected from the group of viridis, magma, plasma, inferno, civids", mako, rocket and turbo, with viridis as the preferred choice, because the viridis scales provide colour maps that are perceptually uniform in both colour and black-and-white

In particular these colour maps are designed to be 1) colourful, i.e. spanning as wide a palette as possible so as to make differences easy to see, 2) perceptually uniform, i.e. such that data values close to each other have similar appearing colours and data values far away from each other have more differently appearing colours, preferably consistently across the range of data values.

For training data that is assessed by humans it is preferred that colour mapping is applied, because colour maps are designed for improved human perceptibility. Hence, humans that assess fluorescent images to detect, identify and/or outline anatomical regions will most likely be able to improve the assessment of the fluorescent images. However, the machine learning algorithm, as used in the presently disclosed approach, does not necessarily obtain any improvement in the assessment of fluorescent images where colour mapping has been applied, because colour mapping is developed for improved human perception.

### Training of Al model

As stated previously the present disclosure further relates a computer implemented method for automatic assessment of an anatomical structure in fluorescence video images of tissue acquired from a subject, utilizing a trained AI model, for example employing a machine learning algorithm. In that regard it is preferred that the machine learning algorithm has been trained with an expert assessment as outcome, i.e. a supervised learning algorithm is preferably used for the assessment. Alternatively an unsupervised learning algorithm is used for the assessment.

One embodiment relates to a method for training an artificial intelligence (Al) model for automatically identifying a predefined anatomical structure in fluorescence images of tissue acquired from a subject, the method comprising obtaining a plurality of training images comprising fluorescence images of tissue. Some of these images comprise fluorescent part and some of the fluorescent parts will be fluorescent anatomical structures and some of these fluorescent anatomical structures will be the predefined fluorescent anatomical structures. The training images may be still images and/or video sequences and may be fluorescent images only or a combination of RGB and fluorescent images. In the training images the predefined anatomical structures may be detected and/or identified already and it is the purpose of the medical expert to identify and/or confirm the identification. Alternatively or supplementary no anatomical structures are detected or marked in anyway such that it is the purpose of the medical expert to detect and identify the predefine anatomical structures.

Hence, the training method may further comprise detecting, identifying, annotating and/or labelling fluorescent anatomical structures identified in the fluorescence images, preferably by a medical expert. And also training the AI model using the annotated/labelled fluorescence images as training images, and wherein the annotated/labelled fluorescence images are used at output for the AI model.

In that regard it will help the medical expert if the training images are visually improved utilizing the presently disclosed approach for contrast enhancement. And the present inventors have also surprisingly realized that the training of the AI model is both faster and more precise if the annotated/labelled fluorescence images fed into the AI model has been visually improved utilizing the presently disclosed approach.

The training data may comprising a plurality of fluorescence images in the form of a plurality of discrete fluorescence images comprising fluorescent anatomical structures and/in the form of a plurality of fluorescence video sequences of tissue comprising fluorescent anatomical structures. The training data may also be comprise a background signal, such as a RGB / B&W non-fluorescent images, to supplement the fluorescence images.

Part of the training process may to outline a perimeter of the identified anatomical structures. This can be provided fully manually by the experts, fully automatic as a computer implemented step or as a combination thereof. The annotated, outlined and contrast enhanced fluorescence images can then be used at output for the AI model, such that the AI model can also be trained to automatically outline a perimeter of an identified anatomical structure.

The annotation and/or labelling of the training data, such as training images, such as training videos, of fluorescent tissue acquired from a plurality of subjects, may at least partly be provided manually by one or more medical professionals, such as doctors, physicians, and/or surgeons, preferably a medical professional experienced with identifying said anatomical structures in the images, preferably comprises labelling one or more

The annotation and/or labeling can be provided manually by the experts, e.g. medical professionals, such as doctors, physicians, and/or surgeons, preferably a medical professional experienced with detecting, identifying and/or outlining the perimeter of said anatomical structure(s) in the training images. The training images preferably comprise a fluorescent signal and a background signal, such as a RGB / B&W non-fluorescent images, such that the experts can see the combined fluorescent signal and background signal.

In addition the data that are used for training may also be treated with a colour mapping modification. Such a colour mapping modification may also increase the performance of the machine learning algorithm, as the above modifications can be utilized to highlight specific areas of interest in the fluorescent images.

The AI model may be a machine leaning model selected from the group of: deep learning, nearest neighbour, naive Bayes, decision trees, linear regression, support vector machines (SVM) and neural networks, in particular convolutional neural networks (CNN).

Convolutional neural networks are a specialized type of deep learning artificial neural networks that use convolution in place of general matrix multiplication in at least one of their layers. Convolutional neural networks (CNN) are specifically designed to process pixel data and are used in image recognition and processing. One advantage of CNNs is that they use less pre-processing power compared to other image classification algorithms, because the CNN can learn to optimize the filters / kernels through automated learning. This independence from prior knowledge and human intervention in feature extraction is a major advantage.

### Automatic assessment of fluorescent images

As stated previously the present disclosure further relates to a computer implemented method for automatic assessment of an anatomical structure in fluorescence video images of tissue acquired from a subject, the method comprising the steps of: continuously receiving and/or acquiring fluorescence images of the tissue, and automatically assessing anatomical structure in real time by utilizing an artificial intelligence (Al) model. This model is advantageously trained as specified herein. The automatic assessment of the anatomical structure preferably comprises detecting, identifying and/or outlining a perimeter of the anatomical structure. The automatic assessment is preferably performed in real-time or substantially real-time such that assessment of the fluorescent images can be provided in real-time or substantially real-time such that said anatomical structure(s) can be assessed during acquisition of the fluorescent images.

Hence, it should be stressed that the presently disclosed visual improvement approach has a three-fold benefit:
1) It benefits the visual assessment of anatomical structures for medical professionals, like the surgeon, during a medical procedure.
2) The training of the AI model is more efficient and leads to better results, because it reduces unnecessary variations, thereby enabling the AI model to focus on the recognition in the visually improved images. The term variations refers to different weights or patterns that the AI model would otherwise learn from unenhanced images. Without the use of contrast enhancement in the visual improvement, the model may focus on irrelevant features or noise in the data. Therefore, contrast enhancement assists in highlighting the important features, making it easier for the model to learn and focus on what really matters in the images.
3) With a better AI model, the automatic assessment of anatomical structures is enhanced making real-time detection, identification and perimeter outlining of anatomical structures possible during fluorescence video acquisition during a medical procedure. In that regard the anatomical structures like SLNs can be mapped during acquisition of a fluorescence video sequence. E.g. SLN's can be detected, identified and marked in real-time by augmented reality during a medical procedure. And with the visual improvements the surgeon can better check and certify whether the marked SLNs are actual SLNs.

### Anatomical regions

In the presently disclosed approach, the anatomical structure(s) may be selected from the group of: lymph nodes, such as sentinel lymph nodes, urethra, and bile duct.

A lymph node, aka lymph gland, is a kidney-shaped organ of the lymphatic system, and the adaptive immune system. Lymph nodes are important for the proper functioning of the immune system, acting as filters for foreign particles including cancer cells, but have no detoxification function. A lymph node is enclosed in a fibrous capsule and is made up of an outer cortex and an inner medulla. A large number of lymph nodes are linked throughout the body by the lymphatic vessels.

Lymph nodes become inflamed or enlarged in various diseases, which may range from trivial throat infections to life-threatening cancers. The condition of lymph nodes is very important in cancer staging, which decides the treatment to be used and determines the prognosis. In that regard the sentinel node procedure (also termed sentinel lymph node biopsy or SLNB) is the identification, removal and analysis of the sentinel lymph nodes of a particular tumor. The presently disclosed approach can help to visually enhance lymph nodes in fluorescent imaging and also provide for automatic detection, identification and/or outlining of lymph nodes such that more lymph nodes are detected during for example SLNB.

### Fluorescent dye

At least one fluorescence imaging agent may be selected from the group of: indocyanine green (ICG), infracyanine gren (IfCG), brilliant blue green (BBG), and bromophenol blue (BPB), fluorescein isothiocyanate, rhodamine, phycoerythrin, phycocyanin, allophycocyanin, ophthaldehyde, fluorescamine, rose Bengal, trypan blue, fluoro-gold, green fluorescence protein, a flavin, methylene blue, porphysomes, cyanine dye, IRDDye800CW, CLR 1502 combined with a targeting ligand, OTL38 combined with a targeting ligand, or a combination thereof.

Indocyanine green (ICG) is the preferred choice. ICG is a water soluble, tricarbocyanine dye that has Food and Drug Administration (FDA) approval for intravenous injection in many clinical situations. The utility of ICG is based on the properties of functional uptake in the lymph nodes via the lymphatics, radio-opacity on imaging and fluorescence when visualized at surgery.

In one embodiment at least two fluorescent imaging agents are used to generate two different fluorescent signals simultaneously. The at least two fluorescent imaging agents may have different emittance wavelengths, i.e. the fluorescence images may be acquired from at least two different depths of the tissue simultaneously. The at least two different depths may be separated by at least 0.8 cm, preferably at least 1.5 cm.

In a further embodiment the fluorescent imaging agent(s) are attached to a non-normal tissue targeting molecule (e.g. a tumor-targeting molecule).

### Examples

It is expected that the present disclosed visualization approach will provide significant advantages in the detection and identification of SLNs in a subject. Specifically, preliminary studies indicate that the sensitivity is improved when using contrast enhancement in comparison to state of the art fluorescence image analysis.

It is expected that the sensitivity of identifying true positive SLNs using the presently disclosed visualization approach will be increased in comparison with the standard manual approach. Preliminary evaluations by medical professionals with both limited and expert-level experience confirm this and show that the sensitivity indeed can be increased significantly when using the presently disclosed visualization approach utilizing contrast enhancing in comparison with the standard fluorescence images. I.e. application of contrast enhancement, as specified in the present disclosure, can lead to improved results in the identification of SLNs.

A preliminary evaluation also compared a user trying to annotate SLNs in a "normal" standard fluorescence image and a contrast-enhanced image. In the original image, the user has annotated one SLN, but the user has missed another SLN, resulting in a true positive and a false negative indication. In the contrast-enhanced image using the method of the present disclosure, the user has correctly annotated both SLNs, resulting in two true positives.

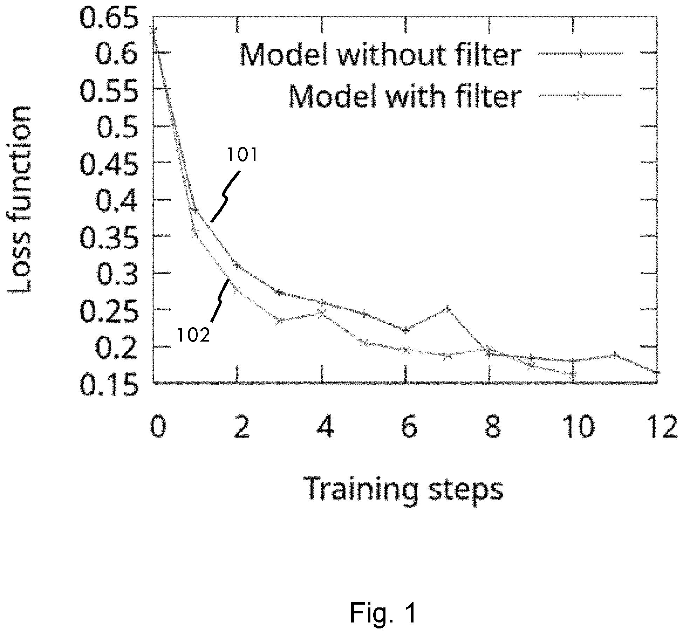

For example, fig. 1 shows a comparison of the loss function as a function of the optimization steps of two trained AI models, with visual improvement using contrast enhancement (aka "with filter" as used in the figures), and without any visual improvement (aka "without filter" as used in the figures). The trained model 102 is trained on fluorescence images that have been visually improved according to the presently disclosed approach, i.e. fluorescence images that have been improved using a contrast and/or colour mapping modification. The second trained model 101 is trained on standard images that are not processed with contrast or colour mapping modifications. Fig. 1 shows that the first trained model 102 has a lower loss function, meaning that by using the visually improved data it is possible to reduce the amount of optimization steps needed to train a model to a certain threshold.

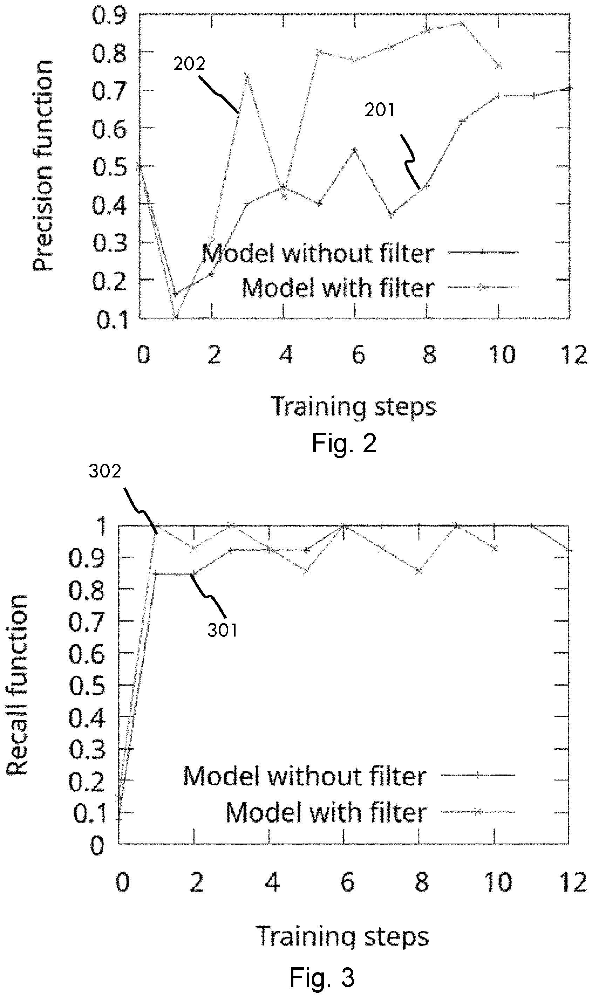

Fig. 2 shows a precision curve during training as a function of the optimization steps for a trained model 202 trained on visually improved data, and for a second trained model 201 trained on standard data. Fig. 2 shows that the prediction precision of the first model 202 is higher than of the second model 201, indicating that training the model with images that have been visually improved using a contrast and colour mapping modification yields better results.

Fig. 3 shows a recall curve during training as a function of the optimization steps for a first trained model 302 trained on visually improved data, and for a second trained model 301 trained on standard data. The results show that the first model 302 has a higher recall curve, meaning that the number of correct classifications over total classifications is higher when a model is trained with visually improved data. Therefore, contrast or colour mapping modifications can improve the training and performance of an AI model for identifying SLNs.

In practice the presently disclosed visualization approach can be implemented in a standard fluorescent system, for example an endoscopic system, for example as a software add-on, that analyses the fluorescent video feed and in real-time visually improves the fluorescence images to the medical personal involved during a medical procedure. I.e. the visualization can be activated by a button, software button and/or hardware button, and turned on and off by request.

Likewise the AI assisted detection and identification can be implemented in a standard fluorescent system, for example an endoscopic system, for example as a software add-on, that analyses the fluorescent video feed and in real-time detects and identifies and preferably also marks on screen, predefined anatomical structures, such as SLNs, helping the medical personnel to detect and identify the anatomical structures during a medical procedure. When a predefined anatomical structure is detected and identified on screen during the medical procedure, the surgeon then may have the option of verifying in practice whether the AI assisted detection is correct. In that regard the AI model can be improved by the surgeon verifying or cancelling the AI assisted identification. The surgeon may also detect and identify structures not detected by the AI model, and then further improve the AI model by annotating this anatomical structure. In that regard local AI models can be generated at for example hospital departments.

The AI assisted detection and identification can be activated by a button, software button and/or hardware button, and turned on and off by request.

### Further details

1. A computer implemented method for improving visualization of at least one fluorescent anatomical structure in images of tissue acquired from a subject, the method comprising the steps of:
   - receiving fluorescence images of the tissue, and
   - enhancing contrast in the images to improve visualization of fluorescent anatomical structures in the images.
2. The method according to item 1, wherein the images comprise fluorescence video images of the tissue.
3. The method according to any one of the preceding items, wherein the fluorescence images are continuously acquired.
4. The method according to any one of the preceding items, wherein contrast is enhanced and improved by application of adaptive histogram equalization.
5. The method according to any one of the preceding items, wherein contrast is enhanced and improved by application of contrast limited adaptive histogram equalization (CLAHE).
6. The method according to any one of the preceding items, wherein contrast is enhanced locally.
7. The method according to any one of the preceding items, further comprising the step of adjusting the brightness of the fluorescence images, preferably globally adjusting the brightness.
8. The method according to any one of the preceding items, wherein brightness of the fluorescence images are adjusted prior to contrast enhancement.
9. The method according to any one of the preceding items, wherein brightness of the fluorescence images are reduced, such as reduced by at least 5%, 10%, preferably at least 15% or 20%.
10. The method according to any one of the preceding items, wherein brightness of the fluorescence images are reduced based on a measured maximum intensity / brightness of the fluorescence images.
11. The method according to any one of the preceding items, further comprising the step of applying colour mapping to the fluorescence images, preferably after contrast enhancement.
12. The method of item 11, wherein the colour mapping is based on a predefined colour scale, preferably selected from the group of viridis, magma, plasma, inferno, civids", mako, rocket and turbo, with viridis as the preferred choice.
13. The method according to any one of the preceding items, wherein contrast is enhanced in the images such that anatomical structures accumulating said fluorescent contrast agent(s) are visually enhanced.
14. The method according to any one of the preceding items, wherein the contrast enhanced fluorescence images are combined with a background signal.
15. The method according to any one of the preceding items, wherein the contrast enhanced fluorescence images are combined with a background signal, such that the transparency of low intensity parts of the fluorescence images are increased.
16. The method according to any one of the preceding items, wherein the acquired images comprise a fluorescent signal and a background signal, wherein the method further comprises the steps of initially separating the fluorescent signal from the background signal in the images to obtain fluorescence images of the tissue, and finally combining the fluorescence images with the background signal.
17. The method according to any one of the preceding items, wherein the anatomical structure(s) is selected from the group of: lymph nodes, such as sentinel lymph nodes, urethra, and bile duct.
18. The method according to any one of the preceding items, wherein the images are acquired a predefined period of time after at least one fluorescent contrast agent has been supplied to the subject, for example injected intravenously and/or injected submucosal and/or injected subserosal.
19. The method according to any one of the preceding items, wherein the steps of the method are executed in real-time, or substantially in real-time, such as executed in real-time on video images continuously acquired and/or received, such as video images comprising at least 10, 15 or preferably at least 25 frames per second (fps), more preferably at least 50 or even at least 100 fps.
20. The method according to any one of the preceding items, wherein the steps of the method are executed on an image-by-image basis / frame-by-frame basis.
21. The method according to any one of the preceding items, wherein a background signal, such as a RGB / B&W non-fluorescent images, is acquired simultaneously with the fluorescent images.
22. The method according to any of the preceding items, wherein at least two fluorescent imaging agents are used to generate two different fluorescent signals simultaneously.
23. The method according to item 22, wherein the at least two fluorescent imaging agents have different emittance wavelengths, and wherein the fluorescence images are acquired from at least two different depths of the tissue simultaneously.
24. The method according to item 23, wherein the at least two different depths are separated by at least 0.8 cm, preferably at least 1.5 cm.
25. The method according to any of the preceding items, wherein the fluorescent imaging agent(s) are attached to a non-normal tissue targeting molecule, such as a tumor-targeting molecule.
26. The method according to any of the preceding items, wherein the at least one fluorescence imaging agent is selected from the group of: indocyanine green (ICG), infracyanine gren (IfCG), brilliant blue green (BBG), and bromophenol blue (BPB), fluorescein isothiocyanate, rhodamine, phycoerythrin, phycocyanin, allophycocyanin, ophthaldehyde, fluorescamine, rose Bengal, trypan blue, fluoro-gold, green fluorescence protein, a flavin, methylene blue, porphysomes, cyanine dye, IRDDye800CW, CLR 1502 combined with a targeting ligand, OTL38 combined with a targeting ligand, or a combination thereof.
27. A method for training an artificial intelligence (Al) model for automatically identifying a predefined anatomical structure in fluorescence images of tissue acquired from a subject, the method comprising the steps of:
   - obtaining a plurality of training images comprising fluorescence images of tissue with fluorescent anatomical structures,
   - optionally identifying the predefined anatomical structures among the fluorescent anatomical structures,
   - annotating and/or labelling fluorescent anatomical structures identified in the fluorescence images, and
   - training the AI model using the annotated/labelled fluorescence images as training images, and wherein the annotated fluorescence images are used at output for the AI model.
28. The method according to item 27, comprising improving visualization of the fluorescence images, preferably utilizing the computer implemented method according to any one of the preceding items 1-26, annotating and/or labelling fluorescent anatomical structures identified in the contrast enhanced fluorescence images, and training the AI model using the annotated/labelled and contrast enhanced fluorescence images as training images, and wherein the annotated and contrast enhanced fluorescence images are used at output for the AI model.
29. The method according to any one of the items 27-28, wherein the predefined anatomical structures are lymph nodes, preferably sentinel lymph nodes (SLN).
30. The method according to any one of the items 27-29, wherein the plurality of obtained fluorescence images are a plurality of video sequences of tissue with fluorescent anatomical structures.
31. The method according to any one of the items 27-30, comprising the step of outlining a perimeter of the identified anatomical structures, and wherein the annotated, outlined and contrast enhanced fluorescence images preferably are used at output for the AI model.
32. The method according to any one of the items 27-31, wherein the annotation and/or labelling is at least partly provided manually by one or more medical professionals, such as doctors, physicians, and/or surgeons, preferably a medical professional experienced with identifying said anatomical structures in the images.
33. The method according to any one of the items 27-32, wherein the AI model is a machine leaning model selected from the group of: deep learning, nearest neighbour, naive Bayes, decision trees, linear regression, support vector machines (SVM) and neural networks, in particular convolutional neural networks (CNN).
34. The method according to any one of the items 27-33, wherein the training images comprise a fluorescent signal and a background signal, such as a RGB / B&W non-fluorescent images.
35. A computer implemented method for automatic assessment of an anatomical structure in fluorescence (video) images of tissue acquired from a subject, the method comprising the steps of:
   - continuously receiving and/or acquiring fluorescence images of the tissue, and
   - automatically assessing anatomical structure in real time by utilizing an artificial intelligence (Al) model, preferably trained according to the method of any one of items 27-34.
36. The method according to item 35, wherein the automatic assessment of the anatomical structure comprises detecting, identifying and/or outlining a perimeter of the anatomical structure.
37. The method according to any one of the items 35 to 36, wherein the automatic assessment of the anatomical structure comprises detecting an anatomical structure, identifying the detected anatomical structure as the predefined anatomical structure and outlining a perimeter of the identified anatomical structure
38. The method according to any one of the items 35 to 37, wherein the automatic assessment is performed in real-time or substantially real-time such that assessment of the fluorescent images can be provided in real-time or substantially real-time such that said anatomical structure(s) can be assessed during acquisition of the fluorescent images.
39. A computer program having instructions which, when executed by a computing device or computing system, cause the computing device or computing system to carry out any of the methods according to any of the preceding items.
40. A system for improving visualization of at least one fluorescent anatomical structure in images of tissue acquired from a subject, for example during a medical procedure, the system configured for carrying out the steps of any one of items 1-26.
41. A system for training an artificial intelligence (Al) model for automatically identifying a predefined anatomical structure in fluorescence images of tissue acquired from a subject, the system configured for carrying out the steps of any one of items 27-34.
42. A system for automatic assessment of an anatomical structure in fluorescence video images of tissue acquired from a subject, the system configured for carrying out the steps of any one of items 35 to 38.

## Claims

1. A computer implemented method for real-time improving visualization of at least one fluorescent anatomical structure in a sequence of video images of tissue acquired from a subject, the method comprising the steps of:
- continuously receiving the fluorescence video images,
- enhancing contrast in real-time in the video images by application of contrast limited adaptive histogram equalization (CLAHE), wherein contrast is enhanced in the video images such that anatomical structures accumulating said fluorescent contrast agent(s) are visually enhanced.

2. The method according to any one of the preceding claims, wherein contrast is enhanced locally in the video images.

3. The method according to any one of the preceding claims, further comprising the step of globally reducing the brightness of the fluorescence video images based on a measured maximum intensity / brightness of the fluorescence video images and wherein brightness of the fluorescence images are adjusted prior to contrast enhancement.

4. The method according to any one of the preceding claims, further comprising the step of applying colour mapping to the fluorescence video images after contrast enhancement.

5. The method of claim 4, wherein the colour mapping is based on the viridis colour scale.

6. The method according to any one of the preceding claims, wherein the received video images comprise a fluorescent signal and a background signal, wherein the method further comprises the steps of initially separating the fluorescent signal from the background signal in the video images to obtain fluorescence images of the tissue, and finally combining the visually improved fluorescence video images with the background signal such that the transparency of low intensity parts of the fluorescence images are increased.

7. The method according to any one of the preceding claims, wherein the anatomical structure(s) is selected from the group of: lymph nodes, such as sentinel lymph nodes.

8. The method according to any one of the preceding claims, wherein the video images comprise at least 25 frames per second (fps), more preferably at least 50 or even at least 100 fps, and the contrast enhancement is executed on an image-by-image basis / frame-by-frame basis

9. A method for training an artificial intelligence (Al) model, such as a machine learning model, for automatically identifying a predefined anatomical structure in fluorescence video images of tissue acquired from a subject, the method comprising the steps of:
- obtaining a plurality of training images comprising fluorescence images of tissue with fluorescent anatomical structures,
- improving visualization of the fluorescence video images, utilizing the computer implemented method according to any one of the preceding claims 1-8
- identifying and annotating the predefined fluorescent anatomical structures in the contrast enhanced fluorescence images, and
- training the AI model using the annotated and contrast enhanced fluorescence images as training images, and wherein the annotated and contrast enhanced fluorescence images are used at output for the AI model.

10. The method according to claim 9, wherein the predefined anatomical structures are sentinel lymph nodes (SLN).

11. The method according to any one of the claims 9-10, wherein the AI model is a machine leaning model in the form of a convolutional neural network (CNN) and wherein the identification and annotation is at least partly provided manually by one or more medical professionals experienced with identifying said anatomical structures in the images.

12. A computer implemented method for automatic and real-time assessment of a predefined anatomical structure in fluorescence video images of tissue acquired from a subject, the method comprising the steps of:
- continuously receiving fluorescence images of the tissue, and
- automatically assessing the predefined anatomical structure in real time by utilizing an artificial intelligence (Al) model trained according to the method of any one of claims 9-11.

13. The method according to claim 12, wherein the automatic assessment of the anatomical structure comprises detecting an anatomical structure, identifying the detected anatomical structure as the predefined anatomical structure and outlining a perimeter of the identified anatomical structure.

14. A computer program having instructions which, when executed by a computing device or computing system, cause the computing device or computing system to carry out any one of the methods according to any of the preceding claims.

15. A system for improving visualization of at least one fluorescent anatomical structure in video images of tissue acquired from a subject during a medical procedure, the system configured for carrying out the steps of any one of claims 1-8.
